# EUROPEAN PATENT APPLICATION

(11) **EP 2 113 590 A1**
(43) Date of publication of application: **04.11.2009**
(21) Application number: 08155380.2
(22) Date of filing: 29.04.2008
(51) Int. Cl.: D01F 6/06, D01F 6/30, D01F 8/06, B32B 5/02, B32B 27/32, D04H 3/16

(54) **Fibers and nonwovens with improved mechanical properties.**

(71) Applicant: Total Petrochemicals Research Feluy, 7181 Seneffe (Feluy) (BE)
(72) Inventor: Bieser, John, Houston, TX 77030 (US); Pavy, Guillaume, B-1060 Bruxelles (BE); Haubruge, Hugues, B-1457 Walhain (BE); Standaert, Alain, B - 1020 Bruxelles (BE); Wheat, Rusty, Houston, TX 77059-3709 (US)
(74) Representative: Leyder, Francis

(57) **Abstract**

The present invention relates to fibers, particularly to as-spun fibers, having improved properties, in particular improved mechanical properties. In particular, the present invention relates to fibers comprising a metallocene polypropylene having a broader molecular weight distribution. The present invention further relates to nonwovens comprising such fibers and to a process for producing such fibers and nonwovens. The fibers and the nonwoven of the present invention are characterized by improved properties, in particular improved mechanical properties, when compared to the prior art fibers and nonwovens.

## Description

### Field of the invention

The present invention relates to fibers, particularly to as-spun fibers, having improved properties, in particular improved mechanical properties. In particular, the present invention relates to fibers comprising a metallocene polypropylene having a broader molecular weight distribution. The present invention further relates to nonwovens comprising such fibers and to a process for producing such fibers and nonwovens. The fibers and the nonwovens of the present invention are characterized by improved properties, in particular improved mechanical properties, when compared to the prior art fibers and nonwovens.

### The technical problem and the prior art

The combination of mechanical and physical properties together with good processability has made polypropylene the material of choice for a large number of fiber and nonwoven applications, such as for construction and agricultural industries, sanitary and medical articles, carpets, textiles.

Polypropylenes can for example be produced by polymerization of propylene in presence of a Ziegler-Natta catalyst, i.e. transition metal coordination catalysts, specifically titanium halide containing catalysts. Such catalysts in general also contain internal electron donors. The so-called Ziegler-Natta polypropylenes give acceptable properties in fibers and nonwovens. However, for some applications, such as spunbonding or meltblowing, they need to be further modified, e.g. by visbreaking to narrow the molecular weight distribution.

More recently polypropylenes produced by metallocene-based catalytic systems, frequently referred to as metallocene polypropylenes, have become available. Metallocene polypropylenes, due to their intrinsically narrow molecular weight distribution (M_{w}/Mₙ) of around 2, can be used in e.g. spunbonding without further post-reactor modifications and in addition give improved mechanical properties in fibers and nonwovens.

For example, US 5,726,103 discloses composite fabrics comprising a melt blown nonwoven layer and a spunbond nonwoven layer, with at least one of these layers being made from a metallocene polypropylene with Mw/Mn ≤ 5 and a propylene tacticity of greater than 90 percent mmmm pentads. The metallocene polypropylene may be a copolymer comprising propylene and from about 0.2 mol% to about 6 mol% of at least one comonomer selected from the group consisting of 2 to 20 carbon atoms. The melting point of these polypropylene copolymers is in the range from 100°C to 145°C.

EP-A-1 279 754 discloses drawn fibers comprising an isotactic copolymer of propylene and from 0.2 mol% to 10 mol% of at least one alpha-olefin, with said isotactic copolymer being produced in presence of a metallocene-based catalytic system. The fibers are prepared by drawing a melt spun preform at a draw speed of less than 2000 m/min and a draw ratio of at least 1.5. The fibers are further characterized by a tenacity of 3.5 g per denier or more.

However, none of the prior art documents takes account of the fact that the molecular weight distribution of the metallocene polypropylene influences the properties and in particular the mechanical properties of as-spun fibers and nonwovens produced with such metallocene polypropylenes.

It is therefore an object of the present invention to provide fibers and nonwovens that are characterized by improved properties, in particular mechanical properties.

It is a further object of the present invention to provide fibers and nonwovens that are characterized by improved properties, in particular mechanical properties, and good processability.

### Brief description of the invention

We have now discovered that at least one of the above objectives can be met when the polypropylene used to make the fibers and nonwovens is a metallocene polypropylene having a molecular weight distribution that is broader than that of conventional metallocene polypropylene.

The present invention therefore provides fibers comprising a metallocene polypropylene, wherein the metallocene polypropylene has a molecular weight distribution M_{w}/Mₙ of at least 3.0.

The present invention further provides nonwovens and hygiene articles made with such fibers.

The present invention also provides a process for the production of a spunbond nonwoven comprising the steps of
(a) providing a blend comprising a metallocene polypropylene,
(b) feeding the blend of step (a) to an extruder,
(c) subsequently melt-extruding the blend to obtain a molten polymer stream,
(d) extruding the molten polymer stream of step (c) from a number of fine, usually circular, capillaries of a spinneret, thus obtaining filaments of molten polymer, and
(e) subsequently rapidly reducing the diameter of the filaments obtained in the previous step to a final diameter,
   wherein the metallocene polypropylene has a molecular weight distribution (MWD) of at least 3.0.

Further, it provides a process for the production of multicomponent fibers and filaments, said process comprising the steps of
(a1) providing a first blend comprising a metallocene polypropylene,
(a2) providing at least one further blend comprising a thermoplastic polymer,
(b1) feeding each of the blends of steps (a1) and (a2) to a separate extruder,
(c1) consecutively melt-extruding the blends to obtain a molten polymer stream for each blend,
(d1) co-extruding the molten polymer streams of step (c1) from a number of fine capillaries of a spinneret, thus obtaining multicomponent filaments of molten polymer, and
(e) subsequently rapidly reducing the diameter of the filaments obtained in the previous step to a final diameter,
   wherein the metallocene polypropylene has a molecular weight distribution M_{w}/Mₙ of at least 3.0.

The present invention further provides a process for producing nonwovens and laminates using the fibers of the present invention.

### Detailed description of the invention

For the purposes of the present invention the terms "fiber" and "filament" may be used interchangeably.

The polypropylene fibers of the present invention are produced by methods well known to the skilled person. Polypropylene is melted in an extruder, in general passed through a melt pump to ensure a constant feeding rate and then extruded through a number of fine capillaries of a spinneret. The still molten fibers are simultaneously cooled by air, drawn to a final diameter and collected.

Optionally, the so-obtained fibers may be subjected to a further drawing step. They are for example collected on a winder or other suitable collecting means.

For the purposes of the present invention, it is, however, preferred that the fibers be as-spun, i.e. that no further drawing step is conducted with the fibers.

The nonwovens of the present invention may be produced by any suitable method. The preferred methods are the spunbonding process and the melt blown process. Of these the spunbonding process is the most preferred. In the spunbonding process as well as the melt blown process the extruded fibers are drawn in the molten state only. For the purposes of the present invention the fibers comprised in a spunbond nonwoven or a melt blown nonwoven can therefore considered to be as-spun fibers.

In the spunbonding process polypropylene is melted in an extruder, in general first passed through a melt pump to ensure a constant feeding rate and then extruded from a number of fine, usually circular, capillaries of a spinneret, thus obtaining filaments. The filament formation can either be done by using one single spinneret with a large number of holes, generally several thousand, or by using several smaller spinnerets with a correspondingly lower number of holes per spinneret. After exiting from the spinneret, the still molten filaments are quenched by a current of air. The diameter of the filaments is then quickly reduced by a flow of high-velocity air. Air velocities in this drawdown step can range up to several thousands of meters per minute.

Irrespective of which process is used for the production of the fibers or nonwovens, the melt-extruding is preferably done at a melt temperature in the range from 230°C to 260°C.

After drawdown the filaments are collected on a support, for example a forming wire or a porous forming belt, thus first forming an unbonded web, which is then passed through compaction rolls and finally through a bonding step. Bonding of the fabric may be accomplished by thermobonding, hydroentanglement, needle punching, or chemical bonding.

In the melt blown process the polypropylene is melted in an extruder, in general first passed through a melt pump to ensure a constant feeding rate and then through the capillaries of a special melt blowing die. Usually melt blown dies have a single line of usually circular capillaries through which the molten polymer passes. After exiting from the die, the still molten filaments are contacted with hot air at high speed, which rapidly draws the fibers and, in combination with cool air, solidifies the filaments. In the following, the nonwoven is formed by depositing the filaments directly onto a forming wire or a porous forming belt.

The fibers of the present invention may be multicomponent fibers. Preferably they are bicomponent fibers. Bi- or multi-component fibers are known in many different configurations, such as for example side-by-side, sheath-core, islands-in-the-sea, pie or stripe configurations. Bi- or multi-component fibers can be formed by co-extrusion of at least two different components into one fiber or filament. This is done by feeding the different components to a corresponding number of extruders and combining the different melts into a single fiber or filament. The resulting fiber or filament has at least two different essentially continuous polymer phases. Such fibers, their production as well as their forming a nonwoven, are well known to the skilled person and are for example described in F. Fourné, Synthetische Fasern, Carl Hanser Verlag, 1995, chapter 5.2 or in B.C. Goswami et al., Textile Yarns, John Wiley & Sons, 1977, p. 371 - 376.

Composites may be formed from two or more nonwovens, of which at least one is made in accordance with the present invention. In particular, the composites comprise a spunbond nonwoven layer (S) according to the present invention or a melt blown nonwoven layer (M) according to the present invention. Composites in accordance with the present invention can for example be SS, SSS, SMS, SMMSS or any other combination of spunbond and melt blown nonwoven layers.

A first nonwoven or composite, said first nonwoven or composite being in accordance with the present invention, and a film may be combined to form a laminate. The film preferably is a polyolefin film. The laminate is formed by bringing the first nonwoven or composite and the film together and laminating them to one another for example by passing them through a pair of lamination rolls. The laminates may further include a second nonwoven or composite, which can be but need not be according to the present invention, on the face of the film opposite to that of the first nonwoven or composite. In a preferred embodiment, the film of the laminate is a breathable polyolefin film, thus resulting in a laminate with breathable properties.

For the present invention it is essential that the polypropylene is a metallocene polypropylene, i.e. it is produced by a metallocene-based catalytic system. The polymerization of propylene and one or more comonomers is performed with one or more metallocene-based catalytic systems comprising one or more metallocenes, a support and an activating agent. Such catalytic systems are commercially available and thus known to the person skilled in the art.

Further, it is essential that the metallocene polypropylene used in the present invention has a molecular weight distribution (MWD), characterized by the ratio M_{w}/Mₙ, i.e. the ratio of weight average molecular weight M_{w} over number average molecular weight Mₙ, of at least 3.0, preferably of at least 3.5 and most preferably of at least 4.0. Preferably the molecular weight distribution, M_{w}/Mₙ, is at most 7.0, preferably at most 6.5 and most preferably at most 6.0.

The metallocene polypropylene used in the present invention may either be a homopolymer or a copolymer of propylene and one or more comonomers. In case of a copolymer, the comonomers preferably are ethylene or a C₄ - C₁₀ alpha-olefin, such as butene-1, pentene-1, hexene-1, octene-1, 4-methylpentene-1. The preferred comonomers are ethylene and butene-1, with ethylene being the most preferred one. Preferably, the comonomer content is in the range from 0.1 wt% to 5.0 wt%, preferably in the range from 0.2 wt% to 4.5 wt% and most preferably in the range from 0.5 wt% to 4.0 wt% relative to the total amount of metallocene polypropylene.

The metallocene component used to prepare the metallocene polypropylene can be any bridged metallocene known in the art. Preferably it is a metallocene represented by the following general formula.

µ-R¹(C₅R²R³R⁴R⁵)(C₅R⁶R⁷R⁸R⁹)MX¹X² (I)

wherein
the bridge R¹ is -(CR¹⁰R¹¹)ₚ- or -(SiR¹⁰R¹¹)ₚ- with p = 1 or 2, preferably it is -
(SiR¹⁰R¹¹)-;
M is a metal selected from Ti, Zr and Hf, preferably it is Zr;
X¹ and X² are independently selected from the group consisting of halogen, hydrogen, C₁-C₁₀ alkyl, C₆-C₁₅ aryl, alkylaryl with C₁-C₁₀ alkyl and C₆-C₁₅ aryl;
R², R³, R⁴, R⁵, R⁶, R⁷, R⁸, R⁹, R¹⁰ and R¹¹ are each independently selected from the group consisting of hydrogen, C₁-C₁₀ alkyl, C₅-C₇ cycloalkyl, C₆-C₁₅ aryl, alkylaryl with C₁-C₁₀ alkyl and C₆-C₁₅ aryl, or any two neighboring R may form a cyclic saturated or non-saturated C₄-C₁₀ ring; each R², R³, R⁴, R⁵, R⁶, R⁷, R⁸, R⁹, R¹⁰ and R¹¹ may in turn be substituted in the same way.

The preferred metallocene components are represented by the general formula (I), wherein
the bridge R¹ is SiR¹⁰R¹¹;
M is Zr;
X¹ and X² are independently selected from the group consisting of halogen, hydrogen, and C₁-C₁₀ alkyl; and
(C₅R²R³R⁴R⁵) and (C₅R⁶R⁷R⁸R⁹) are indenyl of the general formula C₉R¹²R¹³R¹⁴R¹⁵R¹⁶R¹⁷R¹⁸R¹⁹ wherein R¹², R¹³, R¹⁴, R¹⁵, R¹⁶, R¹⁷, R¹⁸ and R¹⁹ are each independently selected from the group consisting of hydrogen, C₁-C₁₀ alkyl, C₅-C₇ cycloalkyl, C₆-C₁₅ aryl, and alkylaryl with C₁-C₁₀ alkyl and C₆-C₁₅ aryl, or any two neighboring R may form a cyclic saturated or non-saturated C₄-C₁₀ ring;
R¹⁰ and R¹¹ are each independently selected from the group consisting of C₁-C₁₀ alkyl, C₅-C₇ cycloalkyl, and C₆-C₁₅ aryl, or R¹⁰ and R¹¹ may form a cyclic saturated or non-saturated C₄-C₁₀ ring; and
each R¹⁰, R¹¹, R¹², R¹³, R¹⁴, R¹⁵, R¹⁶, R¹⁷, R¹⁸ and R¹⁹ may in turn be substituted in the same way.

Particularly suitable metallocenes are those having C₂-symmetry.

Examples of particularly suitable metallocenes are: dimethylsilanediyl-bis(cyclopentadienyl)zirconium dichloride, dimethylsilanediyl-bis(2-methyl-cyclopentadienyl)zirconium dichloride, dimethylsilanediyl-bis(3-methyl-cyclopentadienyl)zirconium dichloride, dimethylsilanediyl-bis(3-tert-butyl-cyclopentadienyl)zirconium dichloride, dimethylsilanediyl-bis(3-tert-butyl-5-methyl-cyclopentadienyl)zirconium dichloride, dimethylsilanediyl-bis(2,4-dimethyl-cyclopentadienyl)zirconium dichloride, dimethylsilanediyl-bis(indenyl)zirconium dichloride, dimethylsilanediyl-bis(2-methyl-indenyl)zirconium dichloride, dimethylsilanediyl-bis(3-methyl-indenyl)zirconium dichloride, dimethylsilanediyl-bis(3-tert-butyl-indenyl)zirconium dichloride, dimethylsilanediyl-bis(4,7-dimethyl-indenyl)zirconium dichloride, dimethylsilanediyl-bis(tetrahydroindenyl)zirconium dichloride, dimethylsilanediyl-bis(benzindenyl)zirconium dichloride, dimethylsilanediyl-bis(3,3'-2-methyl-benzindenyl)zirconium dichloride, dimethylsilanediyl-bis(4-phenyl-indenyl)zirconium dichloride, ethylene-bis(indenyl)zirconium dichloride, ethylene-bis(tetrahydroindenyl)zirconium dichloride, isopropylidene-(3-tert-butyl-5-methyl-cyclopentadienyl)(fluorenyl) zirconium dichloride.

The polymerization of propylene and one or more comonomers in presence of a metallocene-based catalytic system can be carried out according to known techniques in one or more polymerization reactors. The metallocene polypropylene used in the present invention is preferably produced by polymerization in liquid propylene at temperatures in the range from 20°C to 100°C. Preferably, temperatures are in the range from 60°C to 80°C. The pressure can be atmospheric or higher. It is preferably between 25 and 50 bar. The molecular weight of the polymer chains, and in consequence the melt flow of the metallocene polypropylene, is regulated by the addition of hydrogen to the polymerization medium.

While metallocene polypropylene in general has a molecular weight distribution M_{w}/Mₙ of around 2, the metallocene polypropylene used in the present invention is characterized by a broader molecular weight distribution as indicated above. Such a broader molecular weight distribution can be produced either by choosing a metallocene as component of the catalytic system, with the provision that said metallocene is one that naturally produces polypropylene with a larger molecular weight distribution. Suitable metallocenes can for example be found in L. Resconi et al., Chem. Rev., 2000, 100, (4), pp 1253-1346. Alternatively, it is possible to use a blend of two metallocenes, each characterized in having a different response to hydrogen, thus under the same polymerization conditions producing polypropylenes of different molecular weight, which results in a broader molecular weight distribution for the resulting overall polypropylene. Further, and this is the preferred method, it is possible to produce such a metallocene polypropylene having a broader molecular weight distribution by consecutive polymerization of propylene and one or more optional comonomers in two or more serially connected polymerization reactors, each having a different hydrogen concentration, so as to produce polypropylenes of different molecular weight in each reactor, thus resulting in a broader molecular weight distribution for the overall polypropylene produced in such a system of serially connected polymerization reactors. While it is clear to the skilled person that two, three, four or even five polymerization reactors might be used, it is preferred to use two or three polymerization reactors, with two being the most preferred.

The metallocene polypropylene used in the present invention is characterized by a melt flow index in the range from 1 to 2000 dg/min (as measured according to ISO 1133, condition L, at 230°C under 2.16 kg). When used for fiber spinning the melt flow of the metallocene polypropylene is in the range from 5 dg/min to 40 dg/min. When used in the spunbonding process the melt flow of the metallocene polypropylene is at least 10 dg/min, preferably at least 12, 14, 16, 18 or 20 dg/min. When used in the spunbonding process the melt flow of the metallocene polypropylene is at most 300 dg/min, preferably at most 200 dg/min, more preferably at most 150 dg/min, even more preferably at most 100 dg/min and most preferably at most 60 dg/min. When used in the melt blown process the melt flow of the metallocene polypropylene is at least 100 dg/min, preferably at least 150 dg/min, more preferably at least 200 dg/min, even more preferably at least 250 dg/min and most preferably at least 300 dg/min. When used in the melt blown process the melt flow of the metallocene polypropylene is at most 2000 dg/min, preferably at most 1800 dg/min, more preferably at most 1600 dg/min, and most preferably at most 1400 dg/min.

Preferably, the metallocene polypropylene used in the present invention is characterized by a high isotacticity, for which the content of mmmm pentads is a measure. The content of mmmm pentads is at least 90%, preferably at least 95%, 96 % or 97 %. The isotacticity is determined by NMR analysis according to the method described by G.J. Ray et al. in Macromolecules, vol. 10, n° 4, 1977, p. 773-778.

Preferably, the metallocene polypropylene used in the present invention comprises a nucleating agent. For the purposes of the present invention we define a nucleating agent as a chemical compound that raises the crystallization temperature of the metallocene polypropylene.

Suitable nucleating agents for use in the present invention can be selected from any of the nucleating agents known to the skilled person. It is, however, preferred that the nucleating agent be selected from the group consisting of talc, carboxylate salts, sorbitol acetals, phosphate ester salts, substituted benzene tricarboxamides and polymeric nucleating agents, as well as blends of these.

Examples for carboxylate salts are organocarboxylic acid salts. Particular examples are sodium benzoate and lithium benzoate. The organocarboxylic acid salts may also be alicyclic organocarboxylic acid salts, preferably bicyclic organodicarboxylic acid salts and more preferably a bicyclo[2.2.1]heptane dicarboxylic acid salt. A nucleating agent of this type is sold as HYPERFORM® HPN-68 by Milliken Chemical.

Examples for sorbitol acetals are dibenzylidene sorbitol (DBS), bis(p-methyl-dibenzylidene sorbitol) (MDBS), bis(p-ethyl-dibenzylidene sorbitol) and bis(3,4-dimethyl-dibenzylidene sorbitol) (DMDBS). Bis(3,4-dimethyl-dibenzylidene sorbitol) (DMDBS) is preferred. These can for example be obtained from Milliken Chemical under the trade names of Millad 3905, Millad 3940 and Millad 3988.

Examples of phosphate ester salts are salts of 2,2'-methylene-bis-(4,6-di-tert-butylphenyl)phosphate. Such phosphate ester salts are for example available as NA-11 or NA-21 from Asahi Denka.

### Examples of substituted tricarboxamides are those of general formula (I)

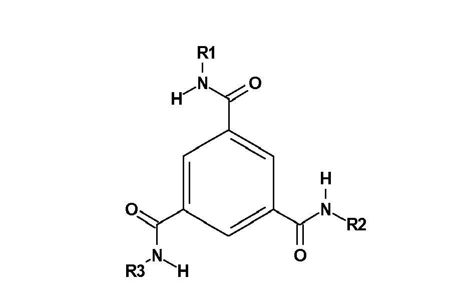

wherein R1, R2 and R3, independently of one another, are selected from C₁-C₂₀ alkyls, C₅-C₁₂ cycloalkyls, or phenyl, each of which may in turn by substituted with C₁-C₂₀ alkyls, C₅-C₁₂ cycloalkyls, phenyl, hydroxyl, C₁-C₂₀ alkylamino or C₁-C₂₀ alkyloxy etc. Examples for C₁-C₂₀ alkyls are methyl, ethyl, n-propyl, n-butyl, iso-butyl, tert-butyl, n-pentyl, iso-pentyl, 1,1-dimethylpropyl, 1,2-dimethylpropyl, 3-methylbutyl, hexyl, heptyl, octyl or 1,1,3,3-tetramethylbutyl. Examples for C₅-C₁₂ cycloalkyl are cyclopentyl, cyclohexyl, cyclooctyl, cyclododecyl, adamantyl, 2-methylcyclohexyl, 3-methylcyclohexyl or 2,3-dimethylcyclohexyl. Such nucleating agents are disclosed in WO 03/102069 and by Blomenhofer et al. in Macromolecules 2005, 38, 3688-3695.

Examples of polymeric nucleating agents are polymeric nucleating agents containing vinyl compounds, which are for example disclosed in EP-A1-0152701 and EP-A2-0368577. The polymeric nucleating agents containing vinyl compounds can either be physically or chemically blended with the metallocene random copolymer of propylene and one or more comonomers. In physical blending the polymeric nucleating agent containing vinyl compounds is mixed with the metallocene random copolymer of propylene and one or more comonomers in an extruder or in a blender. In chemical blending the metallocene random copolymer of propylene and one or more comonomers comprising the polymeric nucleating agent containing vinyl compounds is produced in a polymerization process having at least two stages, in one of which the polymeric nucleating agent containing vinyl compounds is produced. Preferred vinyl compounds are vinyl cycloalkanes or vinyl cycloalkenes having at least 6 carbon atoms, such as for example vinyl cyclopentane, vinyl-3-methyl cyclopentane, vinyl cyclohexane, vinyl-2-methyl cyclohexane, vinyl-3-methyl cyclohexane, vinyl norbornane, vinyl cylcopentene, vinyl cyclohexene, vinyl-2-methyl cyclohexene. The most preferred vinyl compounds are vinyl cyclopentane, vinyl cyclohexane, vinyl cyclopentene and vinyl cyclohexene.

Further examples of polymeric nucleating agents are poly-3-methyl-1-butene, polydimethylstyrene, polysilanes and polyalkylxylenes. As explained for the polymeric nucleating agents containing vinyl compounds, these polymeric nucleating agents can be introduced into the metallocene polypropylene either by chemical or by physical blending.

It is also possible to use high-density polyethylene, such as for example Rigidex HD6070EA, available from INEOS Polyolefins, or a polypropylene having a fractional melt flow, or a polypropylene that comprises a fraction of fractional melt flow.

Further, it is possible to use blends of nucleating agents, such as for example a blend of talc and a phosphate ester salt or a blend of talc and a polymeric nucleating agent containing vinyl compounds.

The nucleating agent may be introduced into the metallocene polypropylene by blending it with a nucleating agent, which is either in pure form or in form of a masterbatch, for example by dry-blending or by melt-blending. It is within the scope of the present invention that the nucleating agent can be introduced into the metallocene polypropylene by blending it with a nucleated thermoplastic polymer, wherein said thermoplastic polymer is different from the metallocene polypropylene

While it is clear to the skilled person that the amount of nucleating agent to be added depends upon its crystallization efficiency, for the purposes of the present invention the nucleating agent or the blend of nucleating agents - if comprised at all - is present in the metallocene polypropylene in an amount of at least 50 ppm, preferably at least 100 ppm. It is present in an amount of at most 5000 ppm, preferably of at most 4000 ppm, even more preferably of at most 3000 ppm and most preferably of at most 2000 ppm.

Preferably, the nucleated metallocene polypropylene, i.e. the metallocene polypropylene comprising a nucleating agent, used in the present invention has a crystallization temperature that is at least 3°C higher than the crystallization temperature of the respective non-nucleated metallocene polypropylene. More preferably, the crystallization temperature of the nucleated metallocene polypropylene is at least 4°C, 5°C, 6°C, 7°C, 8°C, 9°C or 10°C higher than the crystallization temperature of the respective non-nucleated metallocene polypropylene.

The fibers of the present invention consist of one, two or more components, so as to form mono-, bi- or multi-component fibers, which may in turn be comprised in nonwovens. Each of the components may in turn comprise one or more constituents, i.e. the components may be blends. Said constituents are selected from thermoplastic polymers, such as polyethylene, Ziegler-Natta polypropylene or metallocene polypropylene with the provision that at least one of the constituents comprises a metallocene polypropylene as required by the present invention. The metallocene polypropylene is preferably comprised in a component that at least partially forms the surface of the multi-component fibers and filaments. For the percentage of said metallocene polypropylene in a component, it is preferred that said metallocene polypropylene is comprised in at least 50 % by weight of at least one of the components of the fibers and filaments of the present invention, more preferably in at least 60, 70, 80, 90, 95 or 99 % by weight based on the weight of the respective component.

The polypropylene fibers of the present invention can be used in carpets, woven textiles, and nonwovens.

The nonwovens made in accordance with the present invention preferably have a basis weight in the range from 1 g/m² to 200 g/m², more preferably in the range from 5 g/m² to 100 g/m² and most preferably in the range from 7 g/m² to 30 g/m².

The polypropylene spunbond nonwovens of the present invention as well as composites or laminates comprising it can be used for hygiene and sanitary products, such as for example diapers, feminine hygiene products and incontinence products, products for construction and agricultural applications, medical drapes and gowns, protective wear, lab coats etc.

The polypropylene meltblown nonwovens of the present invention can be used in hygiene, filtration and absorption applications, such as diapers, feminine hygiene products, incontinence products, wraps, gowns, masks, filters, absorption pads etc. Frequently polypropylene meltblown nonwovens are used in combination with other nonwovens, such as for example spunbond nonwovens to form composites, which in turn may be used in the cited applications.

### Examples

### TEST METHODS

The melt flow index was measured according to norm ISO 1133, condition L, using a weight of 2.16 kg and a temperature of 230 °C.

Molecular weights are determined by Size Exclusion Chromatography (SEC) at high temperature (145°C). A 10 mg PP sample is dissolved at 160°C in 10 ml of TCB (technical grade) for 1 hour. The analytical conditions for the Alliance GPCV 2000 from WATERS are :
- Volume : +/- 400µl
- Injector temperature : 140°C
- Column and detector: 145°C
- Column set: 2 Shodex AT-806MS and 1 Styragel HT6E
- Flow rate 1ml/min
- Detector: Refractive index
- Calibration : Narrow standards of polystyrene
- Calculation : Based on Mark-Houwink relation (log(M_{PP}) = log(M_{PS}) - 0.25323)

The isotacticity (mmmm %) is determined by NMR analysis according to the method described by G.J. Ray et al. in Macromolecules, vol. 10, n° 4, 1977, p. 773-778. It is performed on the dried product resulting of the extraction by boiling heptane of the xylene insoluble PP fraction.

Fiber tenacity and elongation were measured on a Lenzing Vibrodyn according to norm ISO 5079:1995 with a testing speed of 10 mm/min.

Tensile strength and elongation of the nonwovens were measured according to ISO 9073-3:1989.

Melting temperatures were measured on a DSC 2690 instrument by TA Instruments. To erase the thermal history the samples were first heated to 200°C and kept at 200°C for a period of 3 minutes. The reported melting temperatures were then determined with heating and cooling rates of 20°C/min.

### POLYPROPYLENES

Metallocene polypropylenes PP1 to PP3 were selected to illustrate the advantages of the present invention, with PP3 serving as comparative example.

PP1 and PP2 were produced on a pilot line with two serially connected 150 l loop reactors under standard polymerization conditions using a metallocene-based catalyst with a dimethylsilyl-bridged bis(indenyl)zirconium dichloride derivative as metallocene component. Propylene and hydrogen were added continuously to the two reactors. In order to obtain metallocene polypropylenes having a broader molecular weight distribution than normally, the hydrogen concentration in the two reactors was different so as to produce polypropylenes of different molecular weight in each reactor. The targeted melt flow in the first reactor and the final melt flow of the polypropylene obtained after the second reactor are indicated in table 1. PP3 is a commercial metallocene polypropylene that is produced in a commercial polypropylene production plant with two serially connected loop reactors under standard polymerization conditions using a metallocene-based catalyst with a dimethylsilyl-bridged bis(indenyl)zirconium dichloride derivative as metallocene component. PP3 is produced in such a way that the melt flow indices of the polypropylenes produced in each reactor are identical and basically correspond to the final melt flow index.

**Table 1**

| | | PP1 | PP2 | PP3 |
|---|---|---|---|---|
| MFI in first reactor | dg/min | 13 | 10 | 25 |
| Final MFI (pellets) | dg/min | 22.7 | 20.5 | 24.9 |

| | | | | |
|---|---|---|---|---|
| PP1 and PP2 are homopolymers in accordance with the present invention, i.e. they have a broader molecular weight distribution than standard metallocene polypropylene. PP3 is a homopolymer having a narrow molecular weight distribution generally associated with metallocene polypropylene. A summary of the properties of PP1 to PP3 is given in table 2. | | | | |

All polypropylenes were additivated with a sufficient amount of antioxidants and acid scavengers to reduce their degradation during processing.

**Table 2**

| | | PP1 | PP2 | PP3 |
|---|---|---|---|---|
| MFI | dg/min | 22.7 | 20.5 | 24.9 |
| GPC | | | | |
| Mn | kDa | 52 | 39 | 59 |
| Mw | kDa | 176 | 199 | 165 |
| Mz | kDa | 360 | 514 | 302 |
| D | | 3.4 | 5.1 | 2.8 |
| DSC | | | | |
| Tₘ | °C | 151 | 150 | 152 |

### FIBER SPINNING

Polypropylenes PP1 to PP3 were spun into fibers on a Busschaert pilot line equipped with two circular dies of 112 holes each of a diameter of 0.5 mm. Melt temperature was kept at 250°C. Throughput per hole was kept constant at 0.5 g/hole/min. Take-up speed was kept at 1300 m/min for PP1, PP2 and PP3. No additional drawing step was performed. Properties of the obtained as-spun fibers are indicated in table 3.

**Table 3**

| | | Example 1 | Example 2 | Comparative example 1 |
|---|---|---|---|---|
| Polypropylene | | PP1 | PP2 | PP3 |
| Titer | dtex | 3.8 | 3.8 | 3.8 |
| Tenacity at max | cN/tex | 22.9 | 22.2 | 22.8 |
| Elongation at break | % | 226 | 225 | 230 |

Fiber spinning results show that as-spun fibers made in accordance with the current invention show properties that are on the same level as those produced with metallocene polypropylenes having a narrower molecular weight distribution.

### SPUNBONDED NONWOVENS

Polypropylenes PP1 to PP3 were used to produce spunbonded nonwovens on a 1.1 m wide Reicofil 4 line with a single beam having about 6800 holes per meter length, the holes having a diameter of 0.6 mm. Line speed was kept at 300 m/min. The nonwovens had a fabric weight of 12 g/m². The nonwovens were thermally bonded using an embossed roll. Further processing conditions are given in table 4. The calender temperature reported in table 3 is the bonding temperature at which the highest values for max. tensile strength were obtained. The calender temperature was measured on the embossed roll using a contact thermocouple. Properties of the nonwovens obtained under these conditions are shown in table 5, with MD denoting "machine direction" and CD "cross direction".

**Table 4**

| | | Example 3 | Example 4 | Comparative example 2 |
|---|---|---|---|---|
| Polypropylene | | PP1 | PP2 | PP3 |
| Melt temperature at the die | °C | 250 | 250 | 250 |
| Throughput per hole | g/hole/min | 0.41 | 0.41 | 0.41 |
| Cabin pressure | Pa | 8000 | 8000 | 8000 |
| Calender temperature for max. tensile strength | °C | 145 | 142 | 145 |

**Table 5**

| | | Example 3 | Example 4 | Comparative example 2 |
|---|---|---|---|---|
| Polypropylene | | PP1 | PP2 | PP3 |
| Filament titer | dtex | 1.30 | 1.40 | 1.25 |
| Tensile strength @ max. | | | | |
| MD | N/5cm | 34.9 | 36.4 | 33.8 |
| CD | N/5cm | 18.8 | 19.8 | 17.9 |
| Elongation | | | | |
| MD | % | 65 | 68 | 56 |
| CD | % | 59 | 66 | 57 |

The results of table 4 show that the spunbond nonwovens of examples 3 and 4 produced with the metallocene polypropylenes PP1 and PP2, which are characterized by a broader molecular weight distribution M_{w}/Mₙ, show a measurable improvement in nonwoven tensile strength as well as elongation when compared to a spunbond nonwoven of comparative example 2.

It has also been very surprisingly found that the improvement in nonwoven properties is accompanied by an improved bonding performance, as exemplified by the same or even a lower calender temperature required to arrive at the maximum tensile strength.

## Claims

1. Fibers comprising a metallocene polypropylene, wherein the metallocene polypropylene has a molecular weight distribution M_{w}/Mₙ of at least 3.0.

2. Fibers according to claim 1, wherein the fibers are as-spun fibers.

3. Fibers according to claim 1 or claim 2, wherein the metallocene polypropylene has a molecular weight distribution M_{w}/Mₙ of at least 3.5, preferably of at least 4.0.

4. Fibers according to any of the preceding claims, wherein the metallocene polypropylene has a molecular weight distribution M_{w}/Mₙ of at most 7.0, preferably of at most 6.5 and most preferably of at most 6.0.

5. Nonwoven comprising the fibers and filaments of any of claims 1 to 4.

6. Nonwoven according to claim 5, wherein the nonwoven is a spunbond nonwoven.

7. Laminate comprising the nonwoven of claim 5 or claim 6.

8. Laminate according to claim 7, further comprising a polyolefin film.

9. Process for the production of a spunbond nonwoven comprising the steps of
(a) providing a blend comprising a metallocene polypropylene,
(b) feeding the blend of step (a) to an extruder,
(c) subsequently melt-extruding the blend to obtain a molten polymer stream,
(d) extruding the molten polymer stream of step (c) from a number of fine, usually circular, capillaries of a spinneret, thus obtaining filaments of molten polymer, and
(e) subsequently rapidly reducing the diameter of the filaments obtained in the previous step to a final diameter,
wherein the metallocene polypropylene has a molecular weight distribution (MWD) of at least 3.0.

10. Process for the production of multicomponent fibers and filaments, said process comprising the steps of
(a1) providing a first blend comprising a metallocene polypropylene,
(a2) providing at least one further blend comprising a thermoplastic polymer,
(b1) feeding each of the blends of steps (a1) and (a2) to a separate extruder,
(c1) consecutively melt-extruding the blends to obtain a molten polymer stream for each blend,
(d1) co-extruding the molten polymer streams of step (c1) from a number of fine capillaries of a spinneret, thus obtaining multicomponent filaments of molten polymer, and
(e) subsequently rapidly reducing the diameter of the filaments obtained in the previous step to a final diameter,
wherein the metallocene polypropylene has a molecular weight distribution M_{w}/Mₙ of at least 3.0.

11. Process according to claim 9 or claim 10, wherein the melt-extruding is done at a melt temperature in the range from 230°C to 260°C.

12. Process according to any of claims 9 to 11, further comprising the steps of
(f) collecting the filaments obtained in step (e) on a support, and
(g) subsequently bonding the collected filaments to form a bonded nonwoven.

13. Process according to any of claims 9 to 12, further comprising the step of
(h) laminating a film to the bonded nonwoven obtained in step (g).

14. Process according to any of claims 9 to 13, wherein the bonded nonwoven is a spunbond nonwoven.

15. Process according to any of claims 9 to 14, wherein the fibers and filaments are not subjected to a further drawing step.
